# EUROPEAN PATENT APPLICATION

(11) **EP 3 889 407 A1**
(43) Date of publication of application: **06.10.2021**
(21) Application number: 21159256.3
(22) Date of filing: 25.02.2021
(51) Int. Cl.: F02B 37/00, F02B 37/013, F02B 37/02, F02M 26/08, F02M 26/15, F02M 26/05, F02M 26/06, F01N 5/04, F01N 13/10

(54) **BOOSTED ENGINE AND VEHICLE COMPRISING A BOOSTED ENGINE**

(30) Priority: 01.04.2020 JP 2020065795
(71) Applicant: MAZDA MOTOR CORPORATION, Hiroshima 730-8670 (JP)
(72) Inventor: MATSUMOTO, Takamasa, Aki-gun, Hiroshima 730-8670 (JP); MIYAWAKI, Hiroki, Aki-gun, Hiroshima 730-8670 (JP); YAMAGATA, Naoyuki, Aki-gun, Hiroshima 730-8670 (JP)
(74) Representative: Müller-Boré & Partner Patentanwälte PartG mbB

(57) **Abstract**

A boosted engine is provided, which includes a first turbocharger having a first compressor and a first turbine, a second turbocharger having a second compressor and a second turbine, and first and second exhaust emission control devices. The engine has a first exhaust port which opens at a first timing, and a second exhaust port which is in parallel with the first exhaust port and opens at a second timing later than the first timing. The exhaust passage has a first exhaust passage connected to the first exhaust port and a second exhaust passage connected to the second exhaust port. The first turbine and the first exhaust emission control device are disposed in the first exhaust passage in this order from upstream to downstream, and the second exhaust emission control device and the second turbine are disposed in the second exhaust passage in this order from upstream to downstream.

## Description

### TECHNICAL FIELD

The technology disclosed herein relates to a boosted engine, and a vehicle comprising a boosted engine.

### BACKGROUND OF THE DISCLOSURE

A boosted engine is disclosed in JP2013-189900A. A turbine of a turbocharger is provided to an exhaust passage of the engine. Moreover, an oxidation catalyst and a diesel particulate filter (DPF) are disposed upstream of the turbine in the exhaust passage. A compressor of the turbocharger is provided to an intake passage of the engine.

A high-pressure exhaust gas recirculation (EGR) pipe and a low-pressure EGR pipe are also provided to the engine. The high-pressure EGR pipe connects a part of the intake passage downstream of the compressor to a part of the exhaust passage upstream of the DPF. The low-pressure EGR pipe connects a part of the intake passage upstream of the compressor to a part of the exhaust passage downstream of the turbine.

In the boosted engine disclosed in JP2013-189900A, an oxidation catalyst is provided at a position closer to the engine than the turbine. Therefore, the temperature of the oxidation catalyst becomes high. This configuration is advantageous for improving the purification performance of exhaust gas.

On the other hand, since the turbine is provided downstream of the oxidation catalyst and the DPF, it has a large volume upstream of the turbine. Since the exhaust gas expands if the volume upstream of the turbine is large, energy of the exhaust gas supplied to the turbine decreases. This reduces the boost efficiency of the turbocharger.

### SUMMARY OF THE DISCLOSURE

The technology disclosed herein is made in view of addressing the above situations, and one purpose thereof is to achieve both an improvement in purification performance of the exhaust gas and an improvement in boost efficiency of a turbocharger in a boosted engine.

According to one aspect of the present disclosure, a boosted engine is provided. The boosted engine includes a first turbocharger having a first compressor provided to an intake passage of the engine and a first turbine provided to an exhaust passage of the engine, a second turbocharger having a second compressor provided to the intake passage and a second turbine provided to the exhaust passage, and a first exhaust emission control device and a second exhaust emission control device provided to the exhaust passage and configured to purify exhaust gas discharged from a cylinder of the engine. The engine has a first exhaust port connected to the cylinder and configured to open at a first valve open timing, and a second exhaust port connected to the cylinder so as to be in parallel with the first exhaust port and configured to open at a second valve open timing later than the first valve open timing. The exhaust passage has a first exhaust passage connected to the first exhaust port and a second exhaust passage connected to the second exhaust port. The first turbine and the first exhaust emission control device are disposed in the first exhaust passage in this order from upstream to downstream, and the second exhaust emission control device and the second turbine are disposed in the second exhaust passage in this order from upstream to downstream.

According to this structure, the engine is provided with the two turbochargers comprised of the first turbocharger and the second turbocharger, and the two exhaust emission control devices comprised of the first exhaust emission control device and the second exhaust emission control device.

The first turbine of the first turbocharger between the two turbochargers is disposed upstream of the first exhaust emission control device in the first exhaust passage. Moreover, the first exhaust passage is connected to the cylinder via the first exhaust port, and the first exhaust port opens at the first valve open timing earlier than the second exhaust port.

The combustion ends in the cylinder and then the exhaust port opens to start discharging gas inside the cylinder, immediately after that, a so-called blowdown occurs. That is, strong-momentum exhaust gas is discharged from the cylinder, and the pressure at the exhaust port temporarily increases greatly. The blowdown gas is supplied to the first turbine. Here, since the first turbine is disposed upstream of the first exhaust emission control device in the first exhaust passage, the blowdown gas discharged from the cylinder is supplied to the first turbine without being expanded. Since the energy by the blowdown is supplied to the first turbine without loss, the first turbocharger is improved in boost efficiency.

Moreover, although the blowdown increases the pressure at the exhaust port of the engine in an early stage of an exhaust stroke, since an ascending speed of the piston is slow in the early stage of the exhaust stroke, pumping loss is not or substantially not increased, even if the pressure at the exhaust port is high. By opening only the first exhaust port of the two exhaust ports, the pressure at the exhaust port by the blowdown becomes greatly higher than in the conventional engine, but the pumping loss is not increased.

In a middle stage and a later stage of the exhaust stroke, the pressure at the exhaust port decreases. While the blowdown increases the pressure at the exhaust port much more than in the conventional engine, the pressure at the exhaust port in the middle stage and the later stage of the exhaust stroke decreases more. This reduces the pumping loss in the middle stage and the later stage of the exhaust stroke where the ascending speed of the piston is high.

The second turbine of the second turbocharger is disposed downstream of the second exhaust emission control device in the second exhaust passage. In other words, in the second exhaust passage, the second exhaust emission control device is provided close to the engine. Since the second exhaust emission control device is provided close to the engine, the temperature of the second exhaust emission control device is maintained high.

Particularly, when the engine is increased in thermal efficiency for improving fuel efficiency, the temperature of the exhaust gas becomes low. If the temperature of the exhaust gas is low, the temperatures of the first and the second exhaust emission control devices tend to be low. On the other hand, according to the above structure, since the turbine with large heat capacity does not intervene between the engine and the second exhaust emission control device, the temperature of the second exhaust emission control device can be high, even when the temperature of the exhaust gas is low. The second exhaust emission control device is maintained at an active temperature, thus, the second exhaust emission control device can purify the exhaust gas. Therefore, both fuel efficiency and the emission control of the engine improve.

Accordingly, by the first and the second turbochargers and the first and the second exhaust emission control devices, the engine can achieve both an improvement in purification performance of the exhaust gas and an improvement in boost efficiency.

The first compressor and the second compressor may be disposed in series in the intake passage.

By the first compressor and the second compressor being disposed in series, intake air supplied to the engine can be boosted efficiently.

The first turbocharger may operate in all the operating ranges of the engine, and the second turbocharger may operate in a high-speed range of the engine.

For example, if the first turbocharger is relatively small in the capacity and the second turbocharger is relatively large in the capacity, the first turbocharger can efficiently operate in the low-speed range where the flow rate of the exhaust gas is lower than a given flow rate, while the second turbocharger can efficiently operate in the high-speed range where the flow rate of the exhaust gas is higher than the given flow rate. Therefore, the first turbocharger and the second turbocharger in cooperation can boost the intake air over a wide operating range. A high-speed range of the engine may refer to a range within the upper 60 %, 50 % or 40% of the entire operating range of the engine, for example. A low-speed range of the engine may refer to a range within the lower 40 %, 30 % or 20 % of the entire operating range of the engine, for example.

The boosted engine may further include a first exhaust gas recirculation (EGR) passage connecting a part of the exhaust passage between the second exhaust emission control device and the second turbine to a part of the intake passage downstream of the first and the second compressors. The boosted engine may further include a second EGR passage connecting a part of the exhaust passage downstream of the first exhaust emission control device to a part of the intake passage upstream of the first and the second compressors.

By being provided with the two EGR passages comprised of the first EGR passage and the second EGR passage, the boosted engine can introduce EGR gas into the cylinder over a wide operating range.

The first EGR passage may be configured to open in a high-speed range of the engine, and the second EGR passage may be configured to open in a low-speed range where an engine speed is lower than in the high-speed range.

In the high-speed range of the engine, the pressure at the exhaust side of the engine increases. The EGR gas can be introduced to the part of the intake passage downstream of the first and the second compressors through the first EGR passage.

On the other hand, in the low-speed range, the pressure at the exhaust side becomes low. Since the exhaust-side is low in the pressure, even if the EGR gas is to be introduced to the part downstream of the first and the second compressors through the first EGR passage, the EGR gas cannot be introduced. Thus, the second EGR passage introduces the EGR gas to the part of the intake passage upstream of the first and the second compressors, and therefore, the EGR gas can be introduced even if the pressure at the exhaust side is low.

According to another aspect of the present disclosure, a vehicle comprising a boosted engine is provided.

### BRIEF DESCRIPTION OF DRAWINGS

Fig. 1 is a view schematically illustrating a configuration of an engine system.
Fig. 2 is a block diagram illustrating a control configuration of the engine.
Fig. 3 illustrates in an upper figure a lift curve of a first exhaust valve and a lift curve of a second exhaust valve, and illustrates in a lower figure a pressure fluctuation at an exhaust port in an exhaust stroke.
Fig. 4 is a map illustrating a change in an opening of movable vanes relative to an engine speed.
Fig. 5 is a view illustrating a comparison of a pressure fluctuation of exhaust gas in the engine system with a pressure fluctuation of exhaust gas in a conventional engine system.

### DETAILED DESCRIPTION OF THE DISCLOSURE

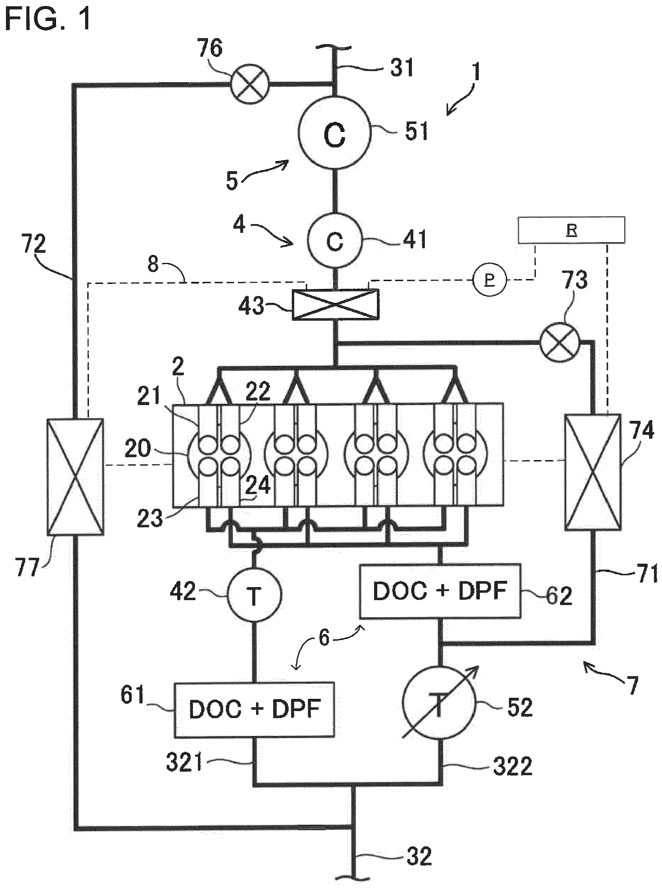

Hereinafter, an embodiment of a boosted engine is described in detail with reference to the accompanying drawings. Fig. 1 illustrates an engine system 1 according to this embodiment. This engine system 1 is mounted on a vehicle. An engine 2 of the engine system 1 is a diesel engine to which fuel mainly containing diesel fuel is supplied. The engine 2 has a plurality of cylinders. In the example configuration of Fig. 1, the engine 2 has four cylinders 20. The number of cylinders 20 provided to the engine 2 is not limited in particular. Each cylinder 20 forms a combustion chamber of the engine 2. Fuel supplied into the cylinder 20 combusts with a compression self-ignition.

### (Configuration of Engine System)

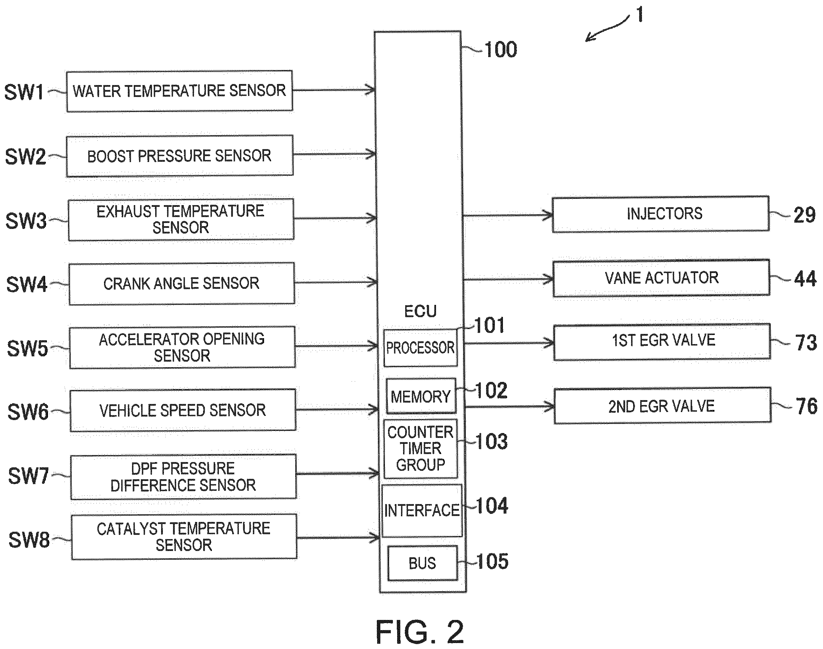

A fuel injection valve (i.e., an injector) 29 is attached to the engine 2 (see Fig. 2). The injector 29 supplies fuel to the engine 2. In more detail, the injector 29 is provided to each cylinder 20, and directly injects fuel into the cylinder 20. The injector 29 receives a control signal from an engine control unit (ECU) 100 (described later). The injector 29 injects fuel into the cylinder 20, at an injection timing set according to an operating state of the engine 2, by an amount according to the operating state of the engine 2. The engine 2 generates torque requested by an operator.

An intake passage 31 is connected to the engine 2. The intake passage 31 supplies intake air to each cylinder 20. The intake air contains air, or air and exhaust gas recirculation (EGR) gas. An exhaust passage 32 is also connected to the engine 2. The exhaust passage 32 discharges exhaust gas from each cylinder 20.

Two intake ports comprised of a first intake port 21 and a second intake port 22, and two exhaust ports comprised of a first exhaust port 23 and a second exhaust port 24 are connected to each cylinder 20.

The intake passage 31 is branched and connected to the first intake port 21 and the second intake port 22.

The exhaust passage 32 has a first exhaust passage 321 connected to the first exhaust port 23 and a second exhaust passage 322 connected to the second exhaust port 24. The first exhaust passage 321 and the second exhaust passage 322 are provided to the engine 2 in parallel to each other. The first exhaust passage 321 and the second exhaust passage 322 join downstream of the parallel parts.

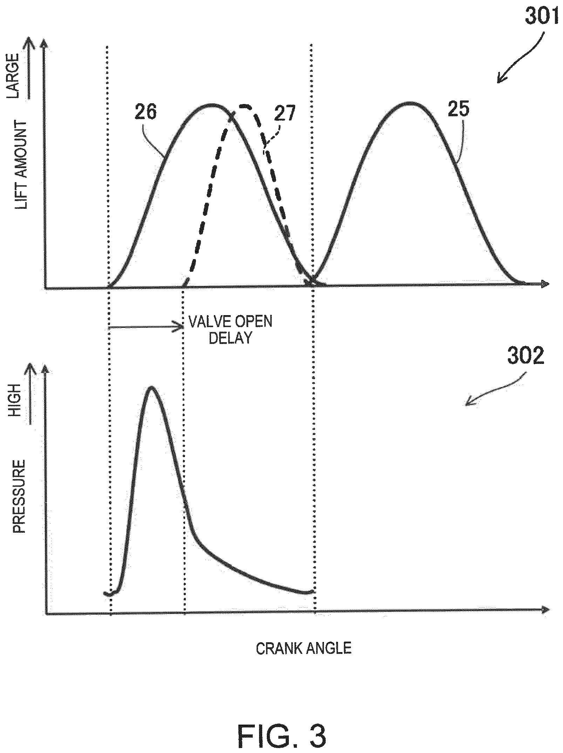

Although illustration is omitted, intake valves and exhaust valves are attached to each cylinder 20 in the engine 2. The intake valves are provided to the first intake port 21 and the second intake port 22, and open and close between the cylinder 20 and the first intake port 21, and between the cylinder 20 and the second intake port 22. The upper figure 301 of Fig. 3 illustrates a lift curve of two intake valves 25. The two intake valves 25 open and close at the same timing.

The exhaust valves are provided to the first exhaust port 23 and the second exhaust port 24, and open and close between the cylinder 20 and the first exhaust port 23, and between the cylinder 20 and the second exhaust port 24. The upper figure 301 of Fig. 3 illustrates a lift curve of a first exhaust valve 26 provided to the first exhaust port 23, and a lift curve of a second exhaust valve 27 provided to the second exhaust port 24. The two exhaust valves 26 and 27 have different valve open timings. Although illustration is omitted, a cam for driving the first exhaust valve 26 and a cam for driving the second exhaust valve 27 which are provided to a cam shaft have different cam profiles.

The first exhaust valve 26 provided to the first exhaust port 23 opens at a first valve open timing which is relatively early. The first valve open timing is a timing at which the piston is located near a bottom dead center (e.g., 30°CA before an exhaust bottom dead center). The second exhaust valve 27 provided to the second exhaust port 24 opens at a second valve open timing which is later than the first valve open timing. The second valve open timing is, for example, after the exhaust bottom dead center. The second exhaust valve 27 has the valve open timing later than the first exhaust valve 26.

A close timing of the first exhaust valve 26 is near an exhaust top dead center. A close timing of the second exhaust valve 27 is also near the exhaust top dead center. The close timings of the two exhaust valves 26 and 27 are almost the same. Moreover, the maximum lift amounts of the two exhaust valves 26 and 27 are also almost the same.

In the intake passage 31, a second compressor 51 of a second turbocharger 5, a first compressor 41 of a first turbocharger 4, and an intercooler 43 are disposed in this order from upstream to downstream. In other words, the second compressor 51 of the second turbocharger 5 is located at an upstream location of the intake passage 31 with respect to the first compressor 41 of the first turbocharger 4. The first compressor 41 of the first turbocharger 4 is located at an upstream location of the intake passage 31 with respect to the intercooler 43. The second compressor 51, the first compressor 41 and the intercooler 43 are arranged in series in the intake passage 31, from upstream to downstream. The second compressor 51 increases the pressure of the intake air. The first compressor 41 also increases the pressure of the intake air. The intercooler 43 cools the intake air which is increased in pressure. The intercooler 43 is, for example, a water-cooled heat exchanger. Although illustration is only shown schematically, the intercooler 43 is, for example, connected to a circulation circuit 8 of coolant for the engine 2. A coolant pump P circulates coolant around the circulation circuit 8 and through a radiator R, where the coolant is cooled. The relative positions of the radiator R and coolant pump P and lines of the circulation circuit 8 are shown schematically for illustrative purposes.

The capacity of the first turbocharger 4 is smaller than the capacity of the second turbocharger 5. The first turbocharger 4 can operate when the engine 2 operates in a low-speed range, as will be described later. The first turbocharger 4 operates in all the operating ranges including both the low-speed range and a high-speed range where the engine speed is higher than in the low-speed range. The second turbocharger 5 operates when the engine 2 operates in the high-speed range.

Thus, the second compressor 51 of the large-capacity second turbocharger 5 and the first compressor 41 of the small-capacity first turbocharger 4 are provided in series. Then, by switching between a drive only with the first compressor 41 of the first turbocharger 4 and a drive with both the first compressor 41 of the first turbocharger 4 and the second compressor 51 of the second turbocharger 5, the engine 2 can boost the intake air over a wide operating range.

In the first exhaust passage 321, a first turbine 42 of the first turbocharger 4 and a first exhaust emission control device 61 are disposed. The first turbine 42 and the first exhaust emission control device 61 are disposed in this order from upstream to downstream. In other words, the first turbine 42 is located at an upstream position of the first exhaust passage 321 with respect to the first exhaust emission control device 61, that is the first exhaust emission control device 61 is located downstream to the first turbine 42.

The first exhaust emission control device 61 includes a diesel oxidation catalyst (DOC) as a catalyst device, and a diesel particulate filter (DPF) as a filter device. Although detailed illustration is omitted, the DOC is disposed upstream of the DPF in the first exhaust emission control device 61.

The DOC promotes a reaction for oxidizing CO and HC in the exhaust gas to generate CO₂ and H₂O. Moreover, the DPF captures particulate matters, such as soot, contained in the exhaust gas.

In the second exhaust passage 322, a second turbine 52 of the second turbocharger 5 and a second exhaust emission control device 62 are disposed. The second exhaust emission control device 62 and the second turbine 52 are disposed in this order from upstream to downstream. The disposed order of the turbine and the exhaust emission control device is different in the first exhaust passage 321 and the second exhaust passage 322. In other words, the second exhaust emission control device 62 is located at an upstream position of the second exhaust passage 322 with respect to the second turbine 52, that is the second turbine 52 is located downstream to the second exhaust emission control device 62.

The second exhaust emission control device 62 includes a DOC and a DPF, similar to the first exhaust emission control device 61.

The engine system 1 is not provided with a catalyst which removes NOₓ in the exhaust gas. However, the technology disclosed herein may also be applied to an engine provided with the catalyst which removes NOₓ.

The first turbine 42 of the first turbocharger 4 is rotated by energy of the exhaust gas. A first coupling shaft (not illustrated) couples the first turbine 42 to the first compressor 41. When the first turbine 42 rotates in the first exhaust passage 321, the first compressor 41 rotates in the intake passage 31 to increase the pressure of the intake air.

Similarly, the second turbine 52 of the second turbocharger 5 is coupled to the second compressor 51 through a second coupling shaft (not illustrated). When the second turbine 52 rotates in the second exhaust passage 322, the second compressor 51 rotates in the intake passage 31 to increase the pressure of the intake air.

Although detailed illustration is omitted, the second turbocharger 5 is a variable-displacement turbocharger which is different from the first turbocharger 4. Movable vanes are disposed inside a turbine casing. By adjusting the opening of the movable vanes, a passage cross-sectional area in the second turbocharger 5 changes.

The movable vanes of the second turbocharger 5 are also used for a flow-rate adjustment between the first exhaust passage 321 and the second exhaust passage 322, in addition to the change in the capacity of the second turbocharger 5.

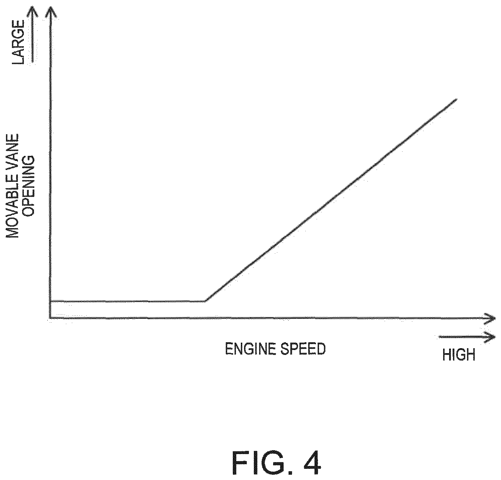

Fig. 4 illustrates the change in the opening of the movable vanes relative to a change in the engine speed. The ECU 100 (described later) makes the opening of the movable vanes minimum in the low-speed range where the engine speed is lower than a given engine speed (in other words, a flow rate of exhaust gas is lower than a given flow rate). Therefore, since the exhaust gas discharged from the engine 2 becomes difficult to flow through the second exhaust passage 322, the flow rate of exhaust gas which flows through the first exhaust passage 321 increases. That is, in the low-speed range where the flow rate of exhaust gas is low, only the first exhaust passage 321 is substantially used.

In the high-speed range where the engine speed becomes higher than the given engine speed, since the flow rate of exhaust gas discharged from the engine 2 increases, the opening of the movable vanes is increased. In the illustrated example, the opening of the movable vanes becomes larger as the engine speed increases. Therefore, the flow rate of exhaust gas which flows through the second exhaust passage 322 increases. As described above, the second turbocharger 5 can boost the intake air in the high-speed range where the engine speed is high.

The engine system 1 is also provided with an exhaust gas recirculation (EGR) system 7. The EGR system 7 recirculates a portion of the exhaust gas to the intake passage 31 as the EGR gas. The EGR system 7 has a first EGR passage 71 and a second EGR passage 72.

The first EGR passage 71 connects a part of the intake passage 31 downstream of the second compressor 51 and the first compressor 41 (in more detail, a part downstream of the intercooler 43) to a part of the second exhaust passage 322 between the second exhaust emission control device 62 and the second turbine 52. A first EGR valve 73 is provided to the first EGR passage 71. The first EGR valve 73 is, for example, an electromagnetic opening adjustment valve. The first EGR valve 73 adjusts a flow rate of the EGR gas which recirculates to the intake passage 31 through the first EGR passage 71.

A first EGR cooler 74 is also provided to the first EGR passage 71. The first EGR cooler 74 cools the EGR gas which flows through the first EGR passage 71. The first EGR cooler 74 is, for example, a water-cooled heat exchanger. The first EGR cooler 74 is connected, for example, to circulation circuit 8 for coolant. The first EGR cooler 74 exchanges heat between the EGR gas and the coolant.

The second EGR passage 72 connects a part of the intake passage 31 upstream of the second compressor 51 and the first compressor 41 to a part of the exhaust passage 32 downstream of the first exhaust emission control device 61 and the second turbine 52. A second EGR valve 76 is provided to the second EGR passage 72. The second EGR valve 76 is also, for example, an electromagnetic opening adjustment valve. The second EGR valve 76 adjusts a flow rate of the EGR gas which recirculates to the intake passage 31 through the second EGR passage 72.

A second EGR cooler 77 is also provided to the second EGR passage 72. The second EGR cooler 77 cools the EGR gas which flows through the second EGR passage 72. The second EGR cooler 77 is, for example, a water-cooled heat exchanger. The second EGR cooler 77 may be connected to circulation circuit 8 for coolant, similarly to the first EGR cooler 74. The second EGR cooler 77 exchanges heat between the EGR gas and the coolant.

Fig. 2 is a block diagram illustrating a control configuration of the engine system 1. The engine system 1 is provided with the engine control unit (ECU) 100. The ECU 100 is comprised of at least one microprocessor, also referred to as a processor 101, which may be a central processing unit (CPU), ASIC, or other logic processing circuitry, memory 102, a counter timer group 103, a communication interface 104 that enables input/output communication with external components, and a communication bus 105 which connects these units. The ECU 100 is configured to control the operation of the engine 2. The ECU 100 is one example of a control unit.

The ECU 100 receives signals from a water temperature sensor SW1, a boost pressure sensor SW2, an exhaust temperature sensor SW3, a crank angle sensor SW4, an accelerator opening sensor SW5, a vehicle speed sensor SW6, a DPF pressure difference sensor SW7, and a catalyst temperature sensor SW8.

The water temperature sensor SW1 is provided to circulation circuit 8 and outputs a signal corresponding to temperature of coolant for the engine 2. The boost pressure sensor SW2 is provided to the intake passage 31 and outputs a signal corresponding to boost pressure. The exhaust temperature sensor SW3 is provided to the exhaust passage 32 and outputs a signal corresponding to exhaust-gas temperature. The crank angle sensor SW4 is attached to the engine 2 and outputs a signal corresponding to a rotation angle of a crankshaft of the engine 2. The accelerator opening sensor SW5 is coupled to an accelerator pedal (not illustrated) and outputs a signal corresponding to an operating amount of the accelerator pedal by an operator. The vehicle speed sensor SW6 is provided, for example, to an axle (not illustrated) and outputs a signal corresponding to a traveling speed of the vehicle. The DPF pressure difference sensor SW7 is attached to the exhaust emission control device 6 and outputs a signal corresponding to a pressure differential between an inlet pressure and outlet pressure of the DPF. The catalyst temperature sensor SW8 is attached to the exhaust emission control device 6 and outputs a signal corresponding to temperature of the DOC and the DPF.

The ECU 100 calculates an engine speed based on the signal from the crank angle sensor SW4, and calculates an engine load based on the signal from the accelerator opening sensor SW5. Moreover, the ECU 100 determines a cold state and a warm state of the engine 2 based on the signal from the water temperature sensor SW1. The ECU 100 determines whether an acceleration is requested from the operator of the vehicle, and a degree of the acceleration request, based on the signal from the accelerator opening sensor SW5.

The ECU 100 also determines whether the DPF is to be regenerated based on the signal from the DPF pressure difference sensor SW7. The regeneration of the DPF is to combust the particulate matter deposited on the DPF. If the ECU 100 determines that the regeneration of the DPF is necessary, it performs a regeneration control of the DPF.

The ECU 100 determines an operating state of the engine 2 based on the inputted signals, and outputs a control signal to the injector 29, a vane actuator 44, the first EGR valve 73, and the second EGR valve 76 so that their operations correspond to the determined operating state. Note that the vane actuator 44 is an actuator for moving the movable vanes of the second turbocharger 5.

Into the cylinder 20 of the engine 2, while air and the EGR gas are introduced by amounts according to the operating state of the engine 2, fuel is supplied. Fuel supplied into the cylinder 20 combusts by compressed self-ignition at a suitable timing.

### (Features of Engine System 1)

This engine 2 combusts fuel with excessive air so that thermal efficiency improves. Moreover, an air amount inside the cylinder 20 is also adjusted by introducing the EGR gas into the cylinder 20. The vehicle on which this engine system 1 is mounted is high in fuel efficiency.

On the other hand, since this engine 2 is high in thermal efficiency, the temperature of exhaust gas discharged from the cylinder 20 is low. If the temperature of the exhaust gas is low, it becomes disadvantageous for activating the DOC. In conventional engines, it is common to provide an exhaust emission control device downstream of a turbine of a turbocharger. Since in the conventional configuration the heat capacity of the turbine is large, there is a problem that the temperature of the exhaust emission control device is more difficult to increase when the temperature of the exhaust gas is low.

On the other hand, this engine system 1 is provided with the first exhaust emission control device 61 and the second exhaust emission control device 62. Among these, the second exhaust emission control device 62 is provided upstream of the second turbine 52 of the second turbocharger 5 in the second exhaust passage 322. Since no turbine exists between the engine 2 and the second exhaust emission control device 62, the second exhaust emission control device 62 can easily increase the temperature by the exhaust gas, and is maintained at a high temperature during operation of the engine 2. Since this engine system 1 can maintain the active state of the DOC during the operation of the engine 2 even if the temperature of the exhaust gas is low, its emission control improves.

On the other hand, if the second exhaust emission control device 62 is disposed upstream of the second turbine 52 of the second turbocharger 5, since the volume upstream of the second turbine 52 is large, the second turbocharger 5 becomes low in the boost response when the operator demands an acceleration of the vehicle.

Therefore, in this engine system 1, the first turbine 42 of the first turbocharger 4 is disposed upstream of the first exhaust emission control device 61 in the first exhaust passage 321 which is in parallel with the second exhaust passage 322. Thus, in the first exhaust passage 321, the exhaust gas from the cylinder 20 is supplied to the first turbine 42, without expanding in the exhaust emission control device. As a result, the boost response of the engine 2 improves.

Further, in this engine system 1, the first exhaust passage 321 is connected to the first exhaust port 23 and the second exhaust passage 322 is connected to the second exhaust port 24 so that the first exhaust passage 321 is separated from the second exhaust passage 322. In addition, as illustrated in the upper figure 301 of Fig. 3, the valve open timing of the exhaust valve 26 of the first exhaust port 23 is advanced from the valve open timing of the exhaust valve 27 of the second exhaust port 24.

Here, the lower figure 302 of Fig. 3 illustrates a pressure fluctuation of exhaust gas in an exhaust stroke where the exhaust valve 26 and the exhaust valve 27 open. When the exhaust valve 26 of the first exhaust port 23 opens, the pressure of the exhaust gas rapidly increases by a blowdown. Then, while the pressure of the exhaust gas decreases, the exhaust valve 27 of the second exhaust port 24 opens.

As described above, since the first exhaust passage 321 is connected to the first exhaust port 23, the exhaust energy by the blowdown is supplied to the first turbine 42 of the first turbocharger 4 provided to the first exhaust passage 321. Since the first turbine 42 is disposed relatively upstream, the first turbocharger 4 is increased in boost efficiency. The boost response of the engine 2 improves by the first turbocharger 4.

This is particularly effective in the low-speed range where boost efficiency of the turbocharger tends to decrease because the exhaust energy of the engine 2 becomes low. That is, the first turbocharger 4 is relatively small in the capacity and efficiently operates in the low-speed range. Moreover, in the low-speed range, the opening of the movable vanes of the VGT is the minimum and the flow rate of exhaust gas which flows through the first exhaust passage 321 is relatively large. Since the first turbine 42 is disposed upstream, the blowdown is utilized, and the flow rate of exhaust gas which flows through the first exhaust passage 321 is large, the engine system 1 is improved in boost efficiency in the low-speed range. Therefore, the boost response of the engine 2 in the low-speed range improves. As a result, the boost response during a transition period of acceleration of the vehicle improves.

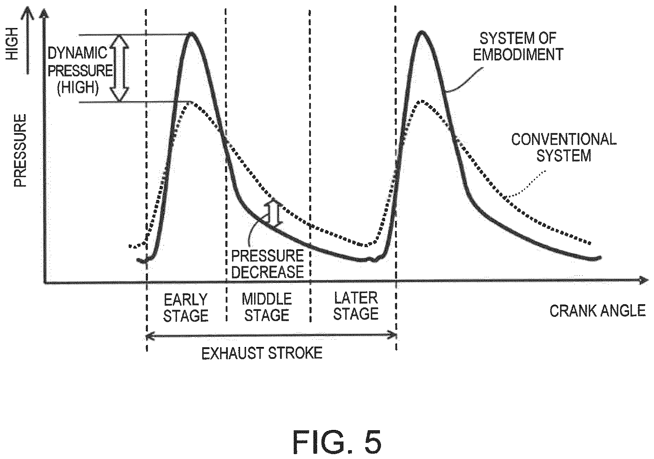

Here, Fig. 5 illustrates a comparison of a pressure fluctuation of the exhaust gas in the engine system 1 (solid line) with a pressure fluctuation of the exhaust gas in a conventional engine system (broken line). The conventional engine system is a system in which two exhaust ports which communicate with the cylinder 20 open simultaneously.

This engine system 1 opens one of the two exhaust ports at a relatively early timing, as described above. Therefore, the blowdown becomes stronger and the pressure of the exhaust gas in an early stage of an exhaust stroke (i.e., dynamic pressure) becomes higher than in the conventional engine system. Here, the exhaust stroke is equally divided into three stages comprised of an early stage, a middle stage, and a later stage.

Although the pressure of the exhaust gas in the early stage of the exhaust stroke becomes high, since an ascending speed of the piston is slow, the engine system 1 does not cause an increase in the pumping loss in this stage. On the other hand, since the pressure is high in the early stage, boost efficiency of the first turbocharger 4 of the engine system 1 improves, as described above.

The pressure of the exhaust gas becomes lower from the middle stage to the later stage of the exhaust stroke. As illustrated by a white arrow in Fig. 5, in the engine system 1, since the blowdown is relatively strong in the middle stage and the later stage of the exhaust stroke, the pressure of exhaust gas decreases more than in the conventional engine system. Since the ascending speed of the piston is high in the middle stage and the later stage of the exhaust stroke, the engine system 1 is influenced by the pressure at the exhaust side of the engine 2. In the engine system 1, since the pressure of exhaust gas is low in the middle stage and the later stage of the exhaust stroke, the pumping loss decreases.

That is, the engine system 1 can achieve both an improvement in boost efficiency of the first turbocharger 4 and a reduction in the pumping loss, as compared with the conventional engine system. Further, the engine system 1 achieves both the improvement in purification performance of the exhaust gas and the improvement in boost efficiency, because of the first and the second turbochargers 4 and 5 and the first and the second exhaust emission control devices 61 and 62.

### (Control of EGR System by ECU)

The ECU 100 recirculates the EGR gas to the intake passage 31 in all the operating ranges of the engine 2. That is, the ECU 100 opens the first EGR valve 73 and/or the second EGR valve 76. When the engine 2 operates with full load (i.e., full throttle), the oxygen concentration inside the cylinder 20 decreases by the EGR gas recirculating to the intake passage 31 to decrease the combustion temperature. When the combustion temperature decreases, the generation of NOₓ can be suppressed.

When the engine 2 operates in the high-speed range where the engine speed is high, since the flow rate of exhaust gas is high, the pressure of the exhaust gas increases compared with the pressure of the intake air. The ECU 100 opens the first EGR valve 73 of the first EGR passage 71, and recirculates the EGR gas to a part of the intake passage 31 downstream of the first compressor 41 and the second compressor 51 through the first EGR passage 71. In other words, the first EGR passage 71 opens in the high-speed range of the engine.

On the other hand, when the engine 2 operates in the low-speed range where the engine speed is lower than in the high-speed range, since the flow rate of exhaust gas is low, the pressure of exhaust gas becomes low. Since the part of the intake passage 31 downstream of the first compressor 41 and the second compressor 51 becomes higher in the pressure than in the exhaust passage 32 even if the EGR gas is recirculated through the first EGR passage 71, the EGR gas cannot be recirculated to the intake passage 31.

Therefore, when the engine 2 operates in the low-speed range, the ECU 100 opens the second EGR valve 76 of the second EGR passage 72 to recirculate the EGR gas to a part of the intake passage 31 upstream of the first compressor 41 and the second compressor 51 through the second EGR passage 72. Since the second EGR passage 72 is connected upstream of the first compressor 41 and the second compressor 51, the EGR gas can be introduced into the low-pressure part of the intake passage 31. In other words, the second EGR passage 72 opens in the low-speed range of the engine where the engine speed is lower than in the high-speed range.

Thus, the EGR system 7 can recirculate the EGR gas to the intake passage 31 over the entire operating range of the engine 2.

Moreover, the first EGR cooler 74 and the second EGR cooler 77 are provided to intervene in the first EGR passage 71 and the second EGR passage 72, respectively. Each of the EGR coolers 74 and 77 cools the EGR gas. When the load of the engine 2 is high, the EGR system 7 can recirculate the cooled EGR gas to the intake passage 31. Therefore, the temperature inside the cylinder 20 into which the EGR gas is introduced is suppressed from becoming excessively high. Further, the occurrence of abnormal combustion in the engine 2 is suppressed.

Moreover, the first EGR passage 71 is connected to a part of the second exhaust passage 322 downstream of the second exhaust emission control device 62. The EGR system 7 can recirculate the clean exhaust gas which is purified by the second exhaust emission control device 62 to the intake passage 31 as the EGR gas. Therefore, contamination of the members constituting the intake system, for example, by particulate matter, is suppressed.

The present disclosure is not limited to the above embodiment, and it may be substituted without departing from the scope of the claims.

Although in the foregoing configuration the second compressor 51 of the large-capacity second turbocharger 5 and the first compressor 41 of the small-capacity first turbocharger 4 are provided in series to the intake passage 31, the combination and arrangement of the first compressor of the first turbocharger and the second compressor of the second turbocharger are not limited to such combination and arrangement. While various combinations are possible for the first compressor of the first turbocharger and the second compressor of the second turbocharger, and various arrangements are also possible.

For example, the technology disclosed herein is not limited to be an application to the diesel engine, but it may also be applied to engines using gasoline and fuel containing naphtha.

The above embodiment is merely illustration and the scope of the present disclosure should not be interpreted restrictively. The scope of the present disclosure is defined by the appended claims, and all of the modifications and alternations which belong to the equivalents of the claims are encompassed within the present disclosure.

### DESCRIPTION OF REFERENCE CHARACTERS

- 1: Engine System
- 2: Engine
- 20: Cylinder
- 23: First Exhaust Port
- 24: Second Exhaust Port
- 31: Intake Passage
- 32: Exhaust Passage
- 321: First Exhaust Passage
- 322: Second Exhaust Passage
- 4: First Turbocharger
- 41: First Compressor
- 42: First Turbine
- 5: Second Turbocharger
- 51: Second Compressor
- 52: Second Turbine
- 61: First Exhaust Emission Control Device
- 62: Second Exhaust Emission Control Device
- 71: First EGR Passage
- 72: Second EGR Passage

## Claims

1. A boosted engine (2), comprising:
a first turbocharger (4) having a first compressor (41) provided to an intake passage (31) of the engine (2) and a first turbine (42) provided to an exhaust passage (32) of the engine (2);
a second turbocharger (5) having a second compressor (51) provided to the intake passage (31) and a second turbine (52) provided to the exhaust passage (32); and
a first exhaust emission control device (61) and a second exhaust emission control device (62) provided to the exhaust passage (32) and configured to purify exhaust gas discharged from a cylinder (20) of the engine (2),
wherein the engine (2) has a first exhaust port (23) connected to the cylinder (20) and configured to open at a first valve open timing, and a second exhaust port (24) connected to the cylinder (20) so as to be in parallel with the first exhaust port (23) and configured to open at a second valve open timing later than the first valve open timing,
wherein the exhaust passage (32) has a first exhaust passage (321) connected to the first exhaust port (23) and a second exhaust passage (322) connected to the second exhaust port (24), and
wherein the first turbine (42) and the first exhaust emission control device (61) are disposed in the first exhaust passage (321) in this order from upstream to downstream, and the second exhaust emission control device (62) and the second turbine (52) are disposed in the second exhaust passage (322) in this order from upstream to downstream.

2. The boosted engine (2) of claim 1, wherein the first compressor (41) and the second compressor (51) are disposed in series in the intake passage (31).

3. The boosted engine (2) of any one of the preceding claims, wherein the first turbocharger (4) operates in all operating ranges of the engine (2), and the second turbocharger (5) operates in a high-speed range of the engine (2).

4. The boosted engine of any one of the preceding claims, further comprising:
a first exhaust gas recirculation (EGR) passage (71) connecting a part of the exhaust passage (32) between the second exhaust emission control device (62) and the second turbine (52) to a part of the intake passage (31) downstream of the first and the second compressors (41, 51).

5. The boosted engine of claim 4, further comprising:
a second EGR passage (72) connecting a part of the exhaust passage (32) downstream of the first exhaust emission control device (61) to a part of the intake passage (31) upstream of the first and the second compressors (41, 51).

6. The boosted engine of claim 5, wherein the first EGR passage (71) is configured to open in the high-speed range of the engine (2), and the second EGR passage (72) is configured to open in a low-speed range where an engine speed is lower than in the high-speed range.

7. A vehicle comprising the boosted engine of any one of claims 1 to 6.
